**Europäisches Patentamt**

**European Patent Office**

**Office européen des brevets**

(11) Veröffentlichungsnummer: **0 213 364 B1**

(12) **EUROPÄISCHE PATENTSCHRIFT**

(45) Veröffentlichungstag der Patentschrift:
**02.11.89**

(51) Int. Cl.⁴: **F16L 23/02**

(21) Anmeldenummer: **86110038.6**

(22) Anmeldetag: **22.07.86**

(54) Flanschverbindung.

(30) Priorität: **31.08.85 DE 3531191**
**13.02.86 DE 3604467**

(43) Veröffentlichungstag der Anmeldung:
**11.03.87 Patentblatt 87/11**

(45) Bekanntmachung des Hinweises auf die Patenterteilung:
**02.11.89 Patentblatt 89/44**

(84) Benannte Vertragsstaaten:
**BE CH DE FR GB IT LI LU NL SE**

(56) Entgegenhaltungen:
**AU-B- 185 066**
**AU-B- 455 752**
**DE-B- 1 162 140**
**DE-C- 386 586**
**FR-A- 1 496 382**
**FR-A- 1 583 060**
**FR-A- 2 107 514**
**US-A- 1 477 696**
**US-A- 2 330 425**
**US-A- 2 632 942**
**US-A- 2 867 454**
**US-A- 3 775 832**

(73) Patentinhaber: **Agintec AG, Limmattalstrasse 395, CH-8049 Zürich(CH)**

(72) Erfinder: **Maier, Hans Paul, Limmattalstrasse 395, Ch-8049 Zürich(CH)**

(74) Vertreter: **Gramm, Werner, Dipl.-Ing. et al, Patentanwälte Gramm + Lins Theodor-Heuss-Strasse 2, D-3300 Braunschweig(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Flanschverbindung für zwei Bauteile, insbesondere für Behälter, Rohre o.dergl., wobei jedes der beiden Bauteile einen Flansch aufweist, der in seiner dem Verbindungsstoß zugewandten Stirnseite eine ringförmige, sich zum Verbindungsstoß hin konisch erweiternde Dichtungskammer aufweist, in die ein ringförmig ausgebildeter Dichtungskörper eintaucht, und wobei die beiden Flansche durch Spannmittel gegeneinander verspannbar sind.

Behälter, Apparate, Rohrleitungen u.dgl. werden meist auf der Basis des Flachdichtungsprinzips abgedichtet und durch gerundete und stumpf geschweißte Flanschringe verspannt. Diese Art der Abdichtung und Verbindung ist mechanisch aufwendig und dementsprechend teuer und erfordert für den Aufbau der Dichtfunktion über die Flachdichtung sehr hohe Kräfte, die wiederum große Flanschring-Querschnitte sowie eine große Anzahl von Spannelementen bedingen.

Die eingangs beschriebene Flanschverbindung läßt sich der AU-B 455 752 entnehmen. Hier ist in die Dichtungskammer des Flansches jeweils ein der Innenkontur der Dichtungskammer angepaßter Dichtungskörper integriert, der mit einer radial nach innen ragenden ringförmigen Lippe stirnseitig gegen das zugeordnete Bauteil anliegt, nachdem der Flansch mit seinem Dichtungskörper auf dieses Bauteil aufgeschoben worden ist. Stirnseitig ragt der Dichtungskörper etwas aus der dem Verbindungsstoß zugewandten Flanschseite heraus. Um eine Verbindung zwischen Dichtungskörper und Bauteiloberfläche zu schaffen, ist die Oberfläche des als Rohr ausgebildeten Bauteils mit Nuten versehen, in die der aufgeschobene Dichtungskörper formschlüssig eingreifen soll, was durch Radialschlitze im Dichtungskörper erleichtert werden soll. Aufgrund der im Verbindungsstoß geteilten Dichtung weist diese vorbekannte Flanschverbindung keine hohe Dichtfunktion auf. Die Oberflächenprofilierung des Rohres reicht nicht aus, bei hohen Betriebsdrücken ein Herausziehen des Rohres aus der Flanschverbindung mit Sicherheit zu verhindern.

Der Erfindung liegt die Aufgabe zugrunde, die eingangs erläuterte Flanschverbindung hinsichtlich ihrer Dichtfunktion zu verbessern.

Diese Aufgabe wird erfindungsgemäß dadurch gelöst, daß der Dichtungskörper ein einzelner, den Verbindungsstoß zwischen den beiden Bauteilen übergreifender Elastomer-Ring ist, der eine nach innen offene Ringnut aufweist, in die ein Innenring lose eingebettet ist, und daß nach dem Verspannen der Flansche diese stirnseitig aneinander anliegen und gemeinsam eine im Querschnitt etwa dreiecksförmige Dichtungskammer bilden, die nahezu vollständig von dem durch das Verspannen verformten Dichtungskörper ausgefüllt ist.

Die erfindungsgemäße Flanschverbindung eignet sich insbesondere für Behälter, Apparate und Rohrleitungen mit größerem Nenndurchmesser. Die Querschnitte für die Flanschprofile können kleiner und dementsprechend leichter dimensioniert werden. Die Anzahl der Spannmittel kann verringert werden, wobei als Spannmittel z.B. Segment-Klammerschrauben verwendet werden können, die von der Firma Walter G. Rathmann angeboten werden.

Durch die konusförmige Ausbildung der Dichtungskammern wird beim Gegeneinanderdrücken der beiden Flansche auf den Dichtungskörper ein Druck in axialer und radialer Richtung ausgeübt. Da der Innenring lose in der Ringnut des Elastomer-Ringes liegt, verstärkt der Arbeitsdruck des Mediums die Abdichtwirkung des Elastomer-Ringes.

Dabei kann es zweckmäßig sein, wenn der Innenring einen inneren ringförmigen Bund aufweist, der als Anschlag zwischen die beiden Bauteile ragt.

Insbesondere für die Verbindung von Bauteilen mit größerem Nenndurchmesser ist es zweckmäßig, wenn die Flansche rundgebogene Abschnitte von endlosem Profilmaterial sind und auch der Elastomer-Ring sowie der Innenring jeweils Abschnitte von endlosen Profilstreifen darstellen.

Bei der neuen Flanschverbindung ist es möglich, daß die beiden Flansche mit dem jeweils zugeordneten Bauteil verschweißt sind. Vorteilhaft bei dieser Ausführungsform ist, daß die Schweißnähte nicht dicht sein, sondern nur Verbindungskräfte aufnehmen müssen.

Es ist bei dem erfindungsgemäßen Verbindungsprinzip aber auch möglich, daß jeder Flansch lose auf das zugeordnete Bauteil aufgeschoben ist und in seiner der Dichtungskammer abgewandten Stirnseite eine Klemmkammer aufweist, in die zumindest ein ringförmiges Klemmelement eingeschoben ist, das sich mit einem radial innenliegenden Klemmrand auf dem Bauteil abstützt, hinsichtlich seines radial außenliegenden Klemmrandes von einer Klemmfläche der Klemmkammer übergriffen wird und in axialer Richtung so aus der Klemmkammer herausragt, daß eine von dem Spannmittel aufgebrachte, das Klemmelement axial beaufschlagende Druckkraft zu einer Vergrößerung des Außendurchmessers und zu einer Verkleinerung des Innendurchmessers des Klemmelementes führt.

Das vorstehend erläuterte ringförmige Klemmelement kann sich auch aus einzelnen Ringsegmenten zusammensetzen.

Der vorstehend erwähnte innere ringförmige Bund des Innenringes wird bei großen und damit schweren Bauteilen vorzugsweise nicht vorgesehen. Der Innenring ist dann ohne Anschlag ausgebildet.

Weitere Ausführungsformen der Erfindung sind Gegenstand der Unteransprüche und werden zusammen mit weiteren Vorteilen der Erfindung anhand von Ausführungsbeispielen näher erläutert.

In der Zeichnung sind einige als Beispiele dienende Ausführungsformen der Erfindung dargestellt. Es zeigen:

Figur 1 im Längsschnitt eine geschweißte Flanschverbindung, und zwar in der oberen Hälfte der Figur vor dem Spannen und in der unteren Hälfte der Figur nach dem Spannen;

Figur 2 eine abgewandelte Ausführungsform in einer Darstellung gemäß Figur 1;

Figur 3 in einer abgewandelten Ausführungsform einen Aufsteckschweißflansch in Draufsicht;

Figur 4 den Flansch gemäß Figur 3 im Querschnitt und in Seitenansicht;

Figur 5 ein Flanschsegment in einer Darstellung gemäß Figur 3

Figur 6 das Flanschsegment gemäß Figur 5 in Seitenansicht und zum Teil im Querschnitt;

Figur 7 das Flanschsegment gemäß den Figuren 5 und 6 in Draufsicht und

Figur 8 im Querschnitt eine Ringscheibe.

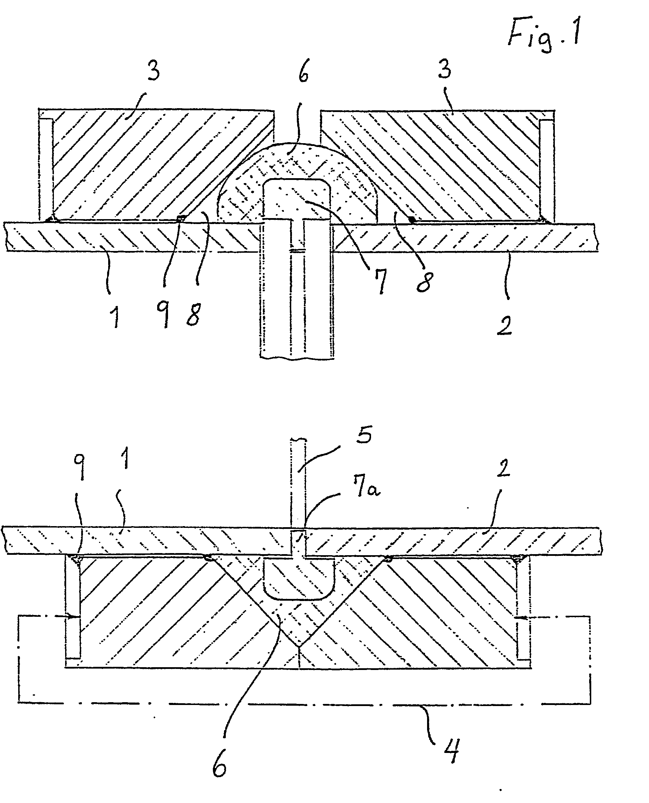

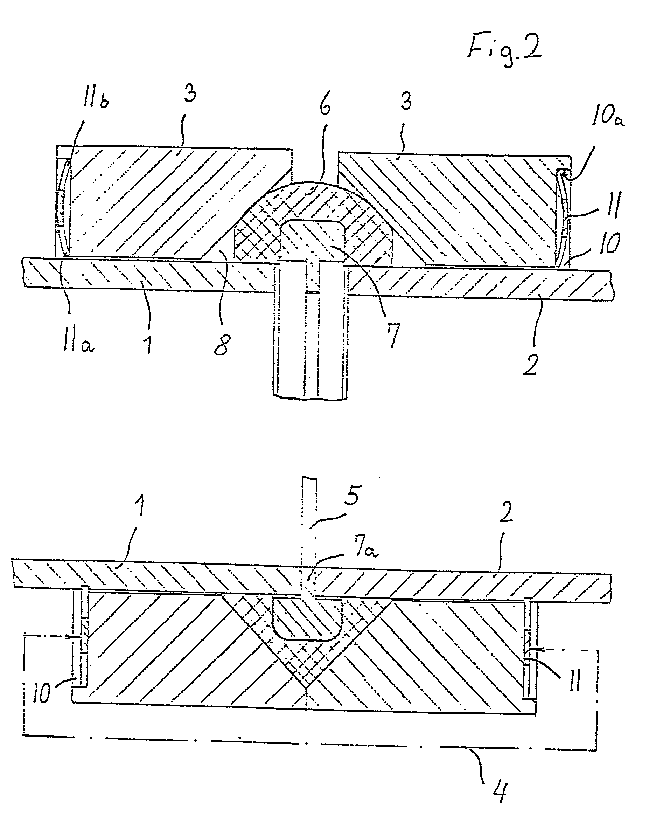

Die in den Figuren 1 und 2 dargestellten Flanschverbindungen für zwei Bauteile 1,2 weisen jeweils zwei Flansche 3 auf, die durch Spannmittel 4 gegeneinander verspannbar sind. Diese Spannmittel sind jeweils in der unteren Hälfte der beiden Figuren nur durch eine strichpunktierte Linie angedeutet und können vorzugsweise Segment-Klammerschrauben sein. Die beiden Flansche 3 schließen zwischen sich einen den Verbindungsstoß 5 zwischen den beiden Bauteilen 1,2 übergreifenden Dichtungskörper ein, der aus einem Elastomer-Ring 6 besteht, der eine nach innen offene Ringnut aufweist, in die ein Innenring 7 eingebettet ist. Letzterer weist einen inneren ringförmigen Bund 7a auf, der als Anschlag zwischen die beiden Bauteile 1,2 ragt.

Jeder Flansch 3 weist in seiner dem Verbindungsstoß 5 zugewandten Stirnseite eine ringförmige, sich zum Verbindungsstoß hin konisch erweiternde Dichtungskammer 8 auf, in die der Dichtungskörper 6,7 jeweils stirnseitig eintaucht. Die untere Hälfte der beiden Figuren läßt erkennen, daß nach dem Verspannen der Flansche diese stirnseitig aneinander anliegen und gemeinsam eine im Querschnitt etwa dreiecksförmige Dichtungskammer bilden, die nahezu vollständig von dem durch das Verspannen verformten Dichtungskörper 6,7 ausgefüllt ist.

Bei der Flanschverbindung gemäß Figur 1 sind die beiden Flansche 3 mit dem jeweils zugeordneten Bauteil 1 bzw. 2 verschweißt, wobei die Schweißnähte 9 nicht dicht sein müssen, da sie lediglich Verbindungskräfte aufnehmen.

Bei der in Figur 2 dargestellten Ausführungsform ist jeder Flansch 3 lose auf das zugeordnete Bauteil 1 bzw. 2 aufgeschoben und weist in seiner der Dichtungskammer 8 abgewandten Stirnseite eine Klemmkammer 10 auf, in die zumindest ein ringförmiges Klemmelement 11 eingeschoben ist. Letzteres stützt sich mit einem radial innenliegenden Klemmrand 11a auf dem Bauteil 1 bzw. 2 ab und wird hinsichtlich seines radial außenliegenden Klemmrandes 11b von einer Klemmfläche 10a der Klemmkammer 10 übergriffen. Die obere Hälfte der Figur 2 läßt ferner erkennen, daß das Klemmelement 11 in axialer Richtung so aus der Klemmkammer 10 herausragt, daß eine von den Spannmitteln 4 aufgebrachte, das Klemmelement 11 axial beaufschlagende Druckkraft zu einer Vergrößerung des Außendurchmessers und zu einer Verkleinerung des Innendurchmessers des Klemmelementes 11 führt. Beim Anziehen der Spannmittel 4 werden die ringförmigen Klemmelemente 11 gegen die Rückseite der jeweiligen Klemmkammer 10 gedrückt, wobei sich der innere Klemmrand 11a etwas in die Manteloberfläche des zugeordneten Bauteiles 1 bzw. 2 drückt (siehe untere Hälfte der Figur 2).

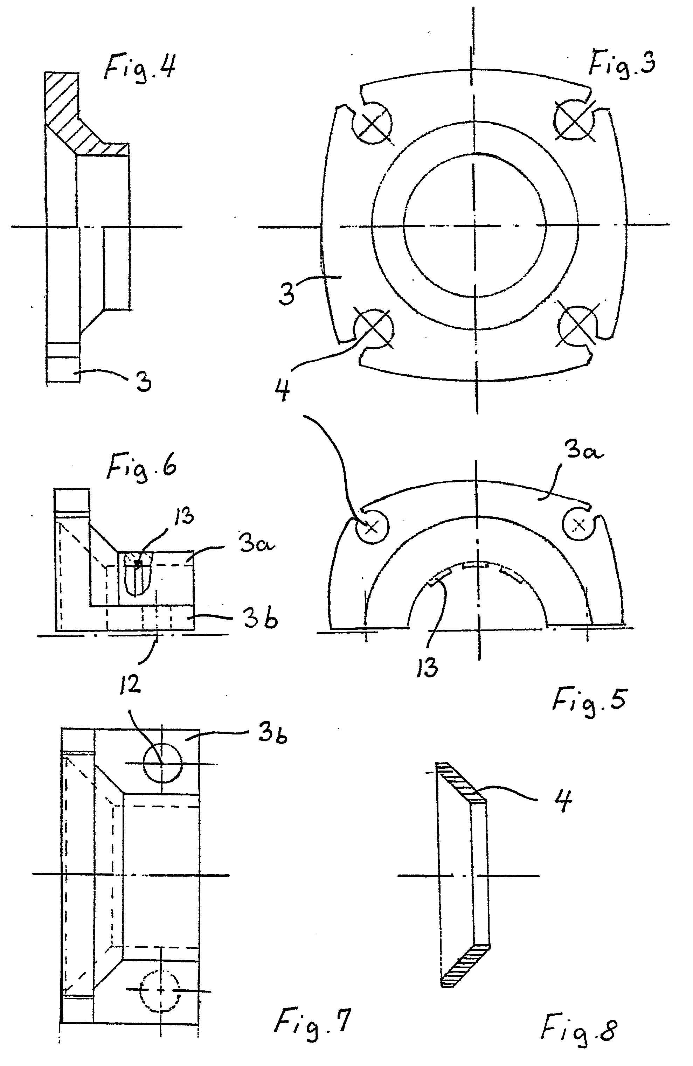

Die Figuren 3 und 4 zeigen für einen Aufsteckschweißflansch eine abgewandelte Ausführungsform. Die diese Flansche 3 gegeneinander verspannenden Spannmittel 4 sind hier durch Kreuze angedeutet und können durch eine übliche Flanschverschraubung gebildet sein.

Gemäß den Figuren 5, 6 und 7 kann zumindest einer der beiden Flansche aus zumindest zwei Flanschsegmenten 3a zusammengesetzt sein. Dargestellt ist ein als Halbschale ausgebildetes Flanschsegment 3a, das mit zwei axial verlaufenden Flanschrändern 3b versehen ist, die bei zusammengebauter Flanschverbindung durch angedeutete Spannmittel 12 gegen entsprechende Flanschränder 3b des zugeordneten Flanschsegmentes 3a gepreßt sind. Bei den Spannmitteln 12 kann es sich wiederum um eine Verschraubung handeln. Denkbar ist auch die Zusammensetzung eines Flansches aus drei oder vier Flanschsegmenten.

Die Figuren 5 und 6 lassen erkennen, daß in die dem Bauteil zugewandte innere Mantelfläche jedes Flanschsegmentes 3a ein Druckringsegment 13 eingelegt ist. Dieses Segment soll den Kraftschluß zwischen Flanschsegment 3a und der zugeordneten äußeren Mantelfläche des Bauteiles 1 bzw. 2 erhöhen. Das Druckringsegment 13 kann z.B. aus Hartmetall bestehen und kann, wie Figur 5 erkennen läßt, sägezahnartig ausgebildet sein. In diesem Fall ergibt sich auch ein Formschluß mit der äußeren Mantelfläche des zugeordneten Bauteiles.

Um beim Zusammenspannen der einzelnen Flanschsegmente 3a eine Beschädigung des Elastomer-Ringes 6 zu vermeiden, kann erfindungsgemäß zumindest in die Dichtungskammer 8 eines geteilten Flansches 3 eine konische, der Innenkontur der Dichtungskammer 8 angepaßte, den Dichtungskörper 6,7 stirnseitig abdeckende Ringscheibe 14 eingeschoben sein, die in Figur 8 dargestellt ist.

Anstelle des Druckringsegmentes 13 oder aber auch zusätzlich kann das in Figur 2 dargestellte Klemmelement 11 mit einer zugeordneten Klemmkammer 10 vorgesehen sein.

## Patentansprüche

1. Flanschverbindung für zwei Bauteile (1, 2), insbesondere für Behälter, Rohre o.dergl., wobei jedes der beiden Bauteile (1, 2) einen Flansch (3) aufweist, der in seiner dem Verbindungsstoß (5) zugewandten Stirnseite eine ringförmige, sich zum Verbindungsstoß (5) hin konisch erweiternde Dichtungskammer (8) aufweist, in die ein ringförmig ausgebildeter Dichtungskörper (6, 7) eintaucht, und wobei die beiden Flansche (3) durch Spannmittel (4) gegeneinander verspannbar sind, dadurch gekennzeichnet, daß der Dichtungskörper (6, 7) ein einzelner, den Verbindungsstoß (5) zwischen den beiden Bauteilen (1, 2) übergreifender Elastomer-Ring (6) ist, der eine nach innen offene Ringnut aufweist, in die ein Innenring (7) lose eingebettet ist, und daß nach dem Verspannen der Flansche (3) diese stirnseitig aneinander anliegen und gemeinsam eine im Querschnitt etwa dreiecksförmige Dichtungskammer bilden, die nahezu vollständig von dem durch das Verspannen verformten Dichtungskörper (6, 7) ausgefüllt ist.

2. Flanschverbindung nach Anspruch 1, dadurch gekennzeichnet, daß der Innenring (7) einen inneren ringförmigen Bund (7a) aufweist, der als Anschlag zwischen die beiden Bauteile (1, 2) ragt.

3. Flanschverbindung nach Anspruch 1 oder 2, dadurch gekennzeichnet, daß die Flansche (3) rundgebogene Abschnitte von endlosem Profilmaterial sind.

4. Flanschverbindung nach einem der vorhergehenden Ansprüche, dadurch gekennzeichnet, daß der Dichtungskörper (6, 7) ein Abschnitt von einem endlosen Profilstreifen ist.

5. Flanschverbindung nach einem der vorhergehenden Ansprüche, dadurch gekennzeichnet, daß die beiden Flansche (3) mit dem jeweils zugeordneten Bauteil (1, 2) verschweißt (9) sind.

6. Flanschverbindung nach einem der Ansprüche 1 bis 4, dadurch gekennzeichnet, daß jeder Flansch (3) lose auf das zugeordnete Bauteil (1, 2) aufgeschoben ist und in seiner der Dichtungskammer (8) abgewandten Stirnseite eine Klemmkammer (10) aufweist, in die zumindest ein ringförmiges Klemmelement (11) eingeschoben ist, das sich mit einem radial innenliegenden Klemmrand (11a) auf dem Bauteil (1, 2) abstützt, hinsichtlich seines radial außenliegenden Klemmrandes (11b) von einer Klemmfläche (10a) der Klemmkammer (10) übergriffen wird und in axialer Richtung so aus der Klemmkammer (10) herausragt, daß eine von dem Spannmittel (4) aufgebrachte, das Klemmelement (11) axial beaufschlagende Druckkraft zu einer Vergrößerung des Außendurchmessers und zu einer Verkleinerung des Innendurchmessers des Klemmelementes (11) führt.

7. Flanschverbindung nach einem der vorhergehenden Ansprüche, dadurch gekennzeichnet, daß die Spannmittel (4) Segment-Klammerschrauben sind.

8. Flanschverbindung nach einem der vorhergehenden Ansprüche, dadurch gekennzeichnet, daß sich zumindest einer der beiden Flansche (3) aus zumindest zwei Flanschsegmenten (3a) zusammensetzt.

9. Flanschverbindung nach Anspruch 8, dadurch gekennzeichnet, daß die Flanschsegmente (3a) axiale Flanschränder (3b) aufweisen, die durch Spannmittel (12) gegeneinander gepreßt sind.

10. Flanschverbindung nach Anspruch 8 oder 9, dadurch gekennzeichnet, daß in die dem Bauteil (1, 2) zugewandte innere Mantelfläche jedes Flanschsegmentes (3a) ein Druckringsegment (13) eingelegt ist.

11. Flanschverbindung nach Anspruch 8, 9 oder 10, dadurch gekennzeichnet, daß zumindest in die Dichtungskammer (8) eines geteilten Flansches (3) eine konische, der Innenkontur der Dichtungskammer (8) angepaßte, den Dichtungskörper (6, 7) stirnseitig abdeckende Ringscheibe (14) eingeschoben ist.

**Claims**

1. Flange connection for two components (1, 2), especially for containers, pipes or the like, wherein each of the two components (1, 2) has a flange (3), which has an annular sealing chamber (8) in its end face facing towards the coupling joint (5), widening out conically towards the coupling joint (5), into which chamber is inserted an annularly formed sealing body (6, 7), and wherein the two flanges (3) can be thightened together by clamping means (4), characterized in that the sealing body (6, 7) is a single elastomer ring (6) engaging over the coupling joint (5) between the two components (1, 2), which ring has an inwardly open annular groove, in which is loosely embedded an inner ring (7), and in that after the tightening of the flanges (3) these abut frontally against each other and together form a sealing chamber of approximately triangular cross-section, which is practically completely filled by the sealing body (6, 7) deformed by the tightening.

2. Flange connection according to claim 1, characterized in that the inner ring (7) has an inner annular rib (7a) which projects as an abutment between the two components (1, 2).

3. Flange connection according to claim 1 or 2, characterized in that the flanges (3) are circularly bent sections of continuous profiled material.

4. Flange connection according to one of the preceding claims, characterized in that the sealing body (6, 7) is a section of a continuous profiled strip.

5. Flange connection according to one of the preceding claims, characterized in that the two flanges (3) are welded (9) to the respective components (1, 2).

6. Flange connection according to one of claims 1 to 4, characterized in that each flange (3) is pushed loosely onto the corresponding component (1, 2) and has a clamping chamber (10) in its end face facing away from the sealing chamber (8), into which clamping chamber is pushed at least one annular clamping element (11) which engages with its radially inner clamping edge (11a) the component (1, 2) and, with respect to its radially outer clamping edge (11b), is gripped over by a clamping surface (10a) of the clamping chamber (10) and projects out of the clamping chamber (10) in the axial direction in such a way that a compressive force applied by the clamping means (4) and acting axially on the clamping element (11) leads to an increase in the outer diameter and a decrease in the inner diameter of the clamping element (11).

7. Flange connection according to one of the preceding claims, characterized in that the clamping means (4) are segment clamping screws.

8. Flange connection according to one of the preceding claims, characterized in that at least one of the two flanges (3) is put together from at least two flange segments (3a).

9. Flange connection according to claim 8, characterized in that the flange segments (3a) have axial flange edges (3b) which are pressed together by clamping means (12).

10. Flange connection according to claim 8 or 9, characterized in that a compression ring segment (13) is inserted into the inner peripheral surface of each flange segment (3a), which surface faces towards the component (1, 2).

11. Flange connection according to claim 8, 9 or 10 characterized in that a conical annular washer (14) adapted to the inner contour of the sealing chamber (8) and covering the end face of the sealing body (6, 7), is pushed at least into the sealing chamber (8) of a divided flange (3).

## Revendications

1. Raccord à brides pour deux éléments (1, 2) à assembler, en particulier pour récipients, tuyaux et autres éléments similaires, chacun des deux éléments (1, 2) présentant une bride (3), laquelle comporte dans sa partie frontale dirigée vers le joint de raccordement (5) une chambre d'étanchéité annulaire (8) s'élargissant en cône en direction du joint de raccordement (5) et dans laquelle est insérée une garniture d'étanchéité annulaire (6, 7), les deux brides (3) pouvant être serrées l'une contre l'autre par des moyens de serrage (4), caractérisé en ce que la garniture d'étanchéité (6, 7) est une bague unique en élastomère (6) qui recouvre le joint de raccordement (5) entre les deux éléments (1, 2), qui présente une encoche annulaire ouverte vers l'intérieur dans laquelle est logée librement une bague intérieure (7), et en ce que, une fois resserrées, les brides (3) se font face l'une contre l'autre et forment ensemble une chambre d'étanchéité de section sensiblement triangulaire qui est pratiquement comblée par la garniture d'étanchéité (6, 7) déformée par le serrage.

2. Raccord à brides conforme à la revendication 1, caractérisé en ce que la bague intérieure (7) présente une collerette annulaire intérieure (7a) qui se dresse en butée entre les deux éléments (1, 2) à assembler.

3. Raccord à brides conforme à l'une des revendications 1 ou 2, caractérisé en ce que les brides (3) sont des tronçons cintrés de profilés continus.

4. Raccord à brides conforme à l'une quelconque des revendications précédentes, caractérisé en ce que la garniture d'étanchéité (6, 7) est un tronçon de bande profilée continue.

5. Raccord à brides conforme à l'une quelconque des revendications précédentes, caractérisé en ce que les deux brides (3) sont soudées (9) chacune à leur élément respectif (1, 2).

6. Raccord à brides conforme à l'une quelconque des revendications 1 à 4, caractérisé en ce que chaque bride (3) est insérée librement sur l'élément (1, 2) à assembler qui lui est associé et présente dans sa partie frontale opposée à la chambre d'étanchéité (8) une chambre de blocage (10) dans laquelle est inséré au moins un élément de blocage annulaire (11), lequel prend appui par son bord radial inférieur (11a) sur l'élément (1, 2), est surplombé du côté de son bord radial extérieur (11b) par une face (10a) de la chambre de blocage (10) et fait axialement saillie de la chambre de blocage (10) de telle sorte qu'une force de pression développée par les moyens de serrage (4), sollicitant axialement l'élément de blocage (11), provoque un agrandissement du diamètre extérieur et une diminution du diamètre intérieur de l'élément de blocage (11).

7. Raccord à brides conforme à l'une quelconque des revendications précédentes, caractérisé en ce que les moyens de serrage (4) sont des boulons-agrafes à segments.

8. Raccord à brides conforme à l'une quelconque des revendications précédentes, caractérisé en ce qu'au moins l'une des deux brides (3) se compose d'au moins deux segments (3a) de bride.

9. Raccord à brides conforme à la revendication 8, caractérisé en ce que les segments (3a) de bride présentent des bords axiaux (3b) qui sont pressés l'un contre l'autre à l'aide de moyens de serrage (12).

10. Raccord à brides conforme à l'une des revendications 8 ou 9, caractérisé en ce qu'un segment annulaire de serrage (13) est enfoncé dans la surface périphérique intérieure tournée vers l'élément (1, 2) de chaque segment de bride (3a).

11. Raccord à brides conforme à l'une des revendications 8, 9 ou 10, caractérisé en ce qu'une rondelle annulaire conique (14), adaptée au contour intérieur de la chambre d'étanchéité (8) et recouvrant par sa face frontale la garniture d'étanchéité (6, 7), est insérée au moins dans la chambre d'étanchéité (8) d'une bride (3) en plusieurs segments.

Fig.1

Fig.2

EP 0 213 364 B1

Fig.4

Fig.3

3

3

4

Fig.6

13

3a

3b

12

3a

13

Fig.5

3b

4

Fig.7

Fig.8